## Europäisches Patentamt
## European Patent Office
## Office européen des brevets

(11) Veröffentlichungsnummer : **0 134 959**
**B1**

(12) **EUROPÄISCHE PATENTSCHRIFT**

(45) Veröffentlichungstag der Patentschrift :
30.12.86

(51) Int. Cl.⁴ : **C 08 G 63/60**

(21) Anmeldenummer : 84107729.0

(22) Anmeldetag : 04.07.84

(54) Thermotrope aromatische Polyester mit hoher Steifigkeit und Zähigkeit, Verfahren zu ihrer Herstellung und ihre Verwendung zur Herstellung von Formkörpern, Filamenten, Fasern und Folien.

(30) Priorität : 16.07.83 DE 3325787

(43) Veröffentlichungstag der Anmeldung :
27.03.85 Patentblatt 85/13

(45) Bekanntmachung des Hinweises auf die Patenterteilung : 30.12.86 Patentblatt 86/52

(84) Benannte Vertragsstaaten :
DE FR GB IT NL

(56) Entgegenhaltungen :
EP-A- 0 026 991
GB-A- 2 006 239
Die Akte enthält technische Angaben, die nach dem Eingang der Anmeldung eingereicht wurden und die nicht in dieser Patentschrift enthalten sind.

(73) Patentinhaber : BAYER AG
Konzernverwaltung RP Patentabteilung
D-5090 Leverkusen 1 Bayerwerk (DE)

(72) Erfinder : Schmidt, Manfred, Dr.
Bodelschwinghstrasse 20
D-4150 Krefeld (DE)
Erfinder : Dicke, Hans-Rudolf, Dr.
Bodelschwinghstrasse 16
D-4150 Krefeld (DE)

## Beschreibung

Die Erfindung betrifft hochmolekulare thermotrope vollaromatische Polyester mit hoher Steifigkeit, Schlagzähigkeit und günstiger Schmelzviskosität, ein Verfahren zu ihrer Herstellung und ihre Verwendung zur Herstellung von Formkörpern, Filamenten, Fasern und Folien.

Als « thermotrop » bezeichnet man solche Polykondensate, die flüssig-kristalline Schmelzen bilden. Sie sind hinreichend bekannt, vergleiche z. B. F. E. McFarlane et al., Liquid Crystal Polymers II, Contemporary Topics in Polymer Science, Vol. 2, Plenum Publishing Corporation, 1977 ; W. J. Jackson und H. F. Kuhfuss, J. Polymer Science, Polymer Chem. Ed. *14*, 2042 (1976) ; W. C. Wooten et al. in A. Ciferri « Ultra-high Modulus Polymers », Applied Science Publ., London 1979, S. 362 f. ; A. Blumstein et al., « Liquid Crystalline Order in Polymers », Academic Press 1978 ; EP 22 344, 24 499, 15 856, 17 310, 15 088, 8 855, WO 79/01034, 79/797 und DE-OS 2 751 653.

Der flüssig-kristalline Zustand der Polykondensatschmelzen läßt sich mit Hilfe eines Polarisationsmikroskops untersuchen : Für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Schichtdicke der untersuchten Polykondensatschmelzen betrug 100 µm.

Die Untersuchung der flüssig-kristallinen Schmelzen erfolgte nach dem Aufschmelzen der Proben bei Temperaturen zwischen 280 °C und 400 °C. Sofern in diesem gesamten Bereich oder in einem Teil davon eine flüssig-kristalline Schmelze beobachtet wird, nennen wir das Polykondensat thermotrop.

Um sicherzustellen, daß die optische Anisotropie der Schmelzen auf einen flüssig-kristallinen Zustand und nicht etwa auf in der Schmelze schwimmende Kristalle des Polykondensats zurückzuführen ist, wurde die Schmelze nach der Messung noch weitere 30 °C über die Untersuchungstemperatur aufgeheizt. Kristalle schmelzen dabei auf, wodurch die optische Anisotropie der Schmelze verschwindet. Nur wenn die Aufhellung der zwischen Nicolschen Prismen beobachteten Schmelze trotz des weiteren Aufheizens nicht verschwand, wurden die Polykondensate als thermotrop eingestuft. Sie zeigten in der Meßanordnung Werte über 1 Skalenteil, meist Werte von 3 bis 90 Skalenteilen. Für amorphe Schmelzen, z. B. aromatische Polycarbonate, wurden dagegen Werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssig-kristalliner Komponenten mittels Röntgenweitwinkelstreuung in der Schmelze nachzuweisen, wie es z. B. bei G.W. Gray und P.A. Windsor, « Plastic Crystals, Physico-Chemical Properties and Methods of Investigation », insbesondere Chapter 3, John Wiley & Sons, New York, Sydney, Toronto 1974, beschrieben ist.

Die DE-OS 20 25 971 betrifft hochmolekulare voll-aromatische Polyester auf Basis von p Molen p-Hydroxybenzoesäure, q Molen aromatischen Dicarbonsäuren (wie Terephthal- oder Isophthalsäure) und r Molen Diphenolen (wie Hydrochinon oder 4,4'-Dihydroxybiphenyl), wobei gilt : q : r = 10 : 15 bis 15 : 10, p : q = 1 : 100 bis 100 : 1, p + q + r = 3 bis 600. Aufgrund der verwendeten Komponenten sind diese Polyester thermotrop ; sie können z. B. zu Fasern verarbeitet werden. Von den 13 Polyestern der Beispiele schmilzt ein einziger unter 300 °C. Diese Polyester sind also schlecht verarbeitbar.

Copolyester aus beispielsweise 50-75 Mol-% 3-Chlor-4-hydroxybenzoesäure, 10-25 Mol-% 3,4'-Dihydroxydiphenylether und 10-25 Mol-% Terephthalsäure fallen unter die Patentansprüche der EP-A-26 991. In den Beispielen wird eine derartige Zusammensetzung aber nicht beschrieben. Aus den Beispielen der EP-A-26 991 ist aber zu entnehmen, daß die dort beschriebenen thermotropen Polyester (bei nur 3 Ausnahmen) bei Temperaturen oberhalb 330 °C, viele sogar oberhalb 350 °C verarbeitet werden müssen. Außerdem werden in der Regel Herstellungstemperaturen oberhalb 330 °C verwendet. Demgegenüber können die erfindungsgemäßen Polyester bei Temperaturen unterhalb 330 °C, oft sogar unterhalb 310 °C hergestellt und verarbeitet werden.

Formkörper, die aus flüssig-kristalliner Schmelze hergestellt werden, weisen mechanische Festigkeiten auf, wie sie normalerweise bei unverstärkten, aus isotroper Schmelze verarbeiteten Polykondensaten nicht gefunden werden ; jedoch läßt die Zähigkeit solcher Formkörper manche Wünsche offen (vgl. US 42 42 496, EP 44 175, W. J. Jackson jr., Brit. Polym. J. *12*, 154 (1980)). Durch eigene Untersuchungen wurde bestätigt, daß thermotrope Polyester hoher Festigkeit in der Regel geringe Zähigkeit und thermotrope Polyester hoher Zähigkeit in der Regel weniger ausgeprägte Festigkeit besitzen.

Aufgabe der Erfindung war es daher, thermotrope vollaromatische Polyester bereitzustellen, die gegenüber den Polyestern der DE-OS 20 25 971 besser verarbeitbar sind und dennoch hervorragende mechanische Eigenschaften aufweisen.

Weitere Aufgabe der Erfindung war es, thermotrope vollaromatische Polyester zur Verfügung zu stellen, die durch thermoplastische Verformung zu Formteilen verarbeitet werden können, welche sowohl hohe mechanische Festigkeit als auch hohe Zähigkeit besitzen.

Bevorzugte neue thermotrope voll-aromatische Polyester sollten eine Schlagzähigkeit von mindestens 20, vorzugsweise von mindestens 30, insbesondere von mindestens 40 kJ/m² besitzen.

Außerdem sollten diese bevorzugten Polyester eine Kerbschlagzähigkeit von mindestens 10, vorzugsweise von mindestens 20, insbesondere von mindestens 25 kJ/m² haben. Weiterhin sollten diese bevorzugten Polyester einen Biege-E-Modul von mindestens 4 500, vorzugsweise von mindestens 5 000, insbesondere von mindestens 6 000 besitzen.

Überraschenderweise wurde gefunden, daß voll-aromatische Polyester, die einkondensierte Reste von p-Hydroxybenzoesäure, 3-Chlor-4-hydroxybenzoesäure, Isophthalsäure, Hydrochinon und 3,4'- und/oder 4,4'-Dihydroxydiphenyl, -diphenylether und/oder -diphenylsulfid enthalten, die gewünschte Kombination vorteilhafter Eigenschaften besitzen.

Gegenstand der Erfindung sind thermotrope voll-aromatische Polyester auf Basis von

(a) (gegebenenfalls substituierter) p-Hydroxybenzoesäure,
(b) 3-Chlor-4-hydroxybenzoesäure,
(c) Isophthalsäure,
(d) Hydrochinon und
(e) 3,4'- und/oder 4,4'-Dihydroxydiphenyl, 3,4'- und/oder 4,4'-Dihydroxydiphenylether und/oder 3,4'- und/oder 4,4'-Dihydroxydiphenylsulfid,

wobei die Polyester die einkondensierten Reste

(a) in einer Konzentration von 25 bis 65, vorzugsweise 30 bis 50, insbesondere 35 bis 47 Mol-%, die einkondensierten Reste
(b) in einer Konzentration von 5 bis 40, vorzugsweise 10 bis 30, insbesondere 15 bis 27, Mol-%, die einkondensierten Reste
(c) in einer Konzentration von 30 bis 50 Mol-%, die einkondensierten Reste
(e) in einer Konzentration von 1 bis 10, vorzugsweise 2 bis 6, Mol-%,

jeweils bezogen auf die Summe der einkondensierten Reste (a), (b) und (c), enthalten mit der Maßgabe, daß sich die Summe der Konzentrationen von (a) und (b) auf minimal 50 und maximal 70 Mol-% ergänzen und daß das Molverhältnis der einkondensierten Reste c/ (d+e) 0,95 bis 1,05 beträgt.

Bevorzugte (a) p-Hydroxybenzoesäuren sind durch 1 bis 2 $C_1$-$C_4$-Alkyl, $C_1$-$C_4$-Alkoxy, $C_6$-$C_{10}$-Aryl oder $C_7$-$C_{12}$-Alkylaryl (wie Phenyl, Tolyl, Naphthyl), kernsubstituierte p-Hydroxybenzoesäuren, z. B. 4-Hydroxy-2-methylbenzoesäure, 4-Hydroxy-3-methyl-benzoesäure, 2-Ethyl-4-hydroxybenzoesäure, 3-Ethyl-4-hydroxybenzoesäure, 4-Hydroxy-2-phenylbenzoesäure oder 4-Hydroxy-3-phenylbenzoesäure, vorzugsweise jedoch unsubstituierte p-Hydroxybenzoesäure selbst.

Die erfindungsgemäßen Polyester können die Reste der Verbindungen (a) bis (e) in statistischer Verteilung, in Segmenten oder in Blöcken enthalten. Betreffend Komponenten (a) und (b) ist darauf zu achten, daß längere Blöcke den Schmelzpunkt und die Schmelzviskosität stark erhöhen können.

Als Endgruppen können die erfindungsgemäßen Polyester COOH, —H, —OH, —OC$_6$H$_5$, Acyloxy oder von Kettenabbrechern herrührende Reste enthalten. Bevorzugte Kettenabbrecher sind monofunktionelle aromatische Hydroxylverbindungen, wie 4-Hydroxydiphenyl, p-Nonylphenol, 4-(1,1,3,3-Tetramethylbutyl)-phenol, β-Naphthol, und aromatische Monocarbonsäuren, wie Diphenylcarbonsäuren und Naphthalincarbonsäuren. Kettenabbrecher können in Mengen von 0,5 bis 5 Mol-%, bezogen auf die Summe der Komponenten a und b, eingesetzt werden.

Gegebenenfalls können auch verzweigende drei- oder höherfunktionelle — vorzugsweise aromatische — Monomere in Mengen von 0,1 bis 1 Mol-%, bezogen auf die Summe der Komponenten a und b, z. B. Phloroglucin, 1,3,5-Benzoltricarbonsäure, Isocyanursäure und 3,5-Dihydroxybenzoesäure, eingesetzt werden.

Die erfindungsgemäßen Polyester besitzen vorzugsweise eine Schmelzviskosität von weniger als 1 000 Pa · s, gemessen bei einer Schergeschwindigkeit von $10^3$ sec$^{-1}$ unter Verwendung einer Düse mit einem Länge/Durchmesserverhältnis von 20 bei einer Temperatur von weniger als 360 °C, vorzugsweise weniger als 330 °C.

Die erfindungsgemäßen Polyester können nach verschiedenen Verfahren hergestellt werden, z. B. durch Kondensation bzw. Umesterung der reaktiven Derivate, der Verbindungen (a) bis (d), z. B. ihrer Ester bzw. Säurechloride, und anschließende Polykondensation.

Beispiele für bevorzugte Ausgangsverbindungen sind also ihre Arylester, ihre Acylester und ihre Säurechloride.

Nach einem bevorzugten Syntheseverfahren werden die niederen Acylester, vorzugsweise die Acetate, der Verbindungen (a), (c) und (d) mit Isophthalsäure (b) umgesetzt, wobei die Acylester auch in situ hergestellt werden können.

Die Reste der Verbindungen (a) bis (d) werden im Verhältnis der Ausgangskomponenten in den Polyester eingebaut.

Die erfindungsgemäßen Polyester sind vorzugsweise frei von Carbonatgruppen.

Es ist zweckmäßig, sowohl die Kondensations- bzw. Umesterungsreaktionen als auch die Polykondensationsreaktionen katalytisch zu beschleunigen. Derartige Katalysatoren sind bekanntlich z. B. Lewis-Säuren und Halogenwasserstoffsäuren ; Oxide, Hydride, Hydroxide, Halogenide, Alkoholate, Phenolate, Salze anorganischer oder organischer Säuren (vorzugsweise Carbonsäuresalze), Komplexsalze oder Mischsalze der Alkalimetalle, z. B. Magnesium, Calcium ; der Nebengruppenelemente, z. B. Vanadium, Titan, Mangan, Cobalt, Nickel, Zink, Lanthan, Cer, Zirkonium oder der Elemente aus anderen Gruppen des Periodensystems, z. B. Germanium, Zinn, Blei und Antimon oder auch die Alkalimetalle oder Erdalkalimetalle selbst, insbesondere Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titanalkoxide wie Titantetrabutylat, Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl- und Diarylzinnoxid, Dibutyl-zinn-diacetat, Di-butyl-dimethoxy-zinn. Besonders bevorzugte sind Magnesium-, Mangan-, Natrium-, Kalium- und Zinkacetat.

Die Katalysatormengen betragen vorzugsweise 0,001 bis 1, insbesondere 0,01 bis 0,2 Gew.-%, bezogen auf das Gesamtgewicht der eingesetzten Monomeren.

Die erfindungsgemäßen Polyester werden bei Temperaturen von 160 bis 370 °C hergestellt, wobei man im allgemeinen die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck bis ca. 0,1 mbar gesenkt wird.

Das erhaltene Produkt kann — vorzugsweise in Granulatform — einer Festphasennachkondensation unter vermindertem Druck bei Temperaturen von 200 bis 300 °C unterworfen werden ; nach 5 bis 25 Stunden haben sich Molekulargewicht erhöht und die daraus resultierenden Eigenschaften des Polyesters merklich verbessert.

Weiterer Gegenstand der Erfindung ist also ein Verfahren zur Herstellung der neuen Polyester durch Umsetzung der Komponenten (a) bis (d) bzw. ihrer reaktionsfähigen Derivate, die auch in situ hergestellt werden können, gegebenenfalls in Gegenwart von Kettenabbrechern, Verzweigungsmitteln und Katalysatoren, bei Temperaturen von 160 bis 370 °C, gegebenenfalls unter vermindertem Druck.

Die erfindungsgemäßen thermotropen Polyester können infolge ihrer relativ geringen Schmelzviskosität vorteilhaft aus der Schmelze zu Spritzgußformteilen, Filamenten, Fasern, Bändern und Filmen verarbeitet werden, wobei durch auftretende Scherkräfte eine Molekülorientierung erzielt wird, die in hohem Maße von der Stärke der Scherkräfte beeinflußt wird. Desweiteren zeigen sie eine ausgeprägte Strukturviskosität, das heißt, daß die Schmelzviskosität bei Erhöhung der Scherkräfte stark abfällt. Geeignete Verarbeitungsverfahren sind Spritzguß, Extrusion, Pressen und Schmelzspinnen.

Aus den erfindungsgemäßen Polyestern können Formteile hoher Zugfestigkeit, außerordentlicher Zähigkeit und großer Dimensionsstabilität hergestellt werden. Da die Polyester außerordentlich chemikalienresistent und flammwidrig sind, eignen sie sich bevorzugt zur Herstellung von

— elektrotechnischen Artikeln, z. B. Isolatoren, gedruckten Schaltungen, Steckkontakte, Armaturenteile,

— Teilen chemisch-technischer Apparate, z. B. Rohre, Behälterauskleidungen, Rotoren, Gleitlager, Dichtungen,

— Teilen der Flugzeuginnenausstattung,

— Teilen medizinisch-technischer Geräte, z. B Bauteile von Klimaanlagen, Ventilteile.

Die erfindungsgemäßen Polyester können aber auch als Überzugs- und Beschichtungsmaterial (pulverförmig oder dispergiert) verwendet werden. Auch zur Herstellung verstärkter oder gefüllter Formmassen mit einem Verstärker- bzw. Füllstoffgehalt von 5 bis 65 Gew.-%, bezogen auf verstärkte bzw. gefüllte Formmasse, sind sie bestens geeignet.

Weiterer Gegenstand der Erfindung ist also die Verwendung der neuen Polyester zur Herstellung von Formkörpern, Filamenten, Fasern und Filmen.


## Beispiele

Die Prüfung der Schlagzähigkeit $a_n$ und Kerbschlagzähigkeit $a_k$ erfolgte an Normalkleinstäben gemäß DIN 53 453 (ISO/R 179) bei 23 °C jeweils an 10 Prüfkörpern. Die Bestimmung der Biegefestigkeit wurde an Normkleinstäben gemäß DIN 53 452 (ISO R 178) durchgeführt. Der Biege-E-Modul wurde gemäß DIN 53 457 ermittelt. Die Messung der Wärmeformbeständigkeit erfolgte durch Bestimmungen der Vicat-B-Erweichungstemperatur gemäß DIN 53 460 (ISO 306).


## Beispiel 1

Analog Vergleich 1 wurden

190,76 g (1,382 Mol) p-Hydroxybenzoesäure,
150,54 g (0,892 Mol) 3-Chlor-4-hydroxybenzoesäure,
22,5 g (0,121 Mol) 4,4′-Dihydroxydiphenyl,
123,59 g (1,123 Mol) Hydrochinon,
206,52 g (1,244 Mol) Isophthalsäure und

564,55 g (5,59 Mol) Acetanhydrid

in Gegenwart von

0,05 g Mangan (II) acetat und
0,02 g Antimontrioxid

zur Reaktion gebracht und einer Festphasennachkondensation (250 °C/16 Stunden) unterworfen.

Beispiel 2

Analog Beispiel 1 wurden

190,58 g (1,181 Mol) p-Hydroxybenzoesäure,
116,52 g (0,642 Mol) 3-Chlor-4-hydroxybenzoesäure,
197,26 g (1,188 Mol) Isophthalsäure,
109,60 g (0,995 Mol) Hydrochinon,
 38,93 g (0,193 Mol) 4,4'-Dihydroxydiphenylether,
524,66 g (5,14 Mol) Acetanhydrid

in Gegenwart von

0,3 g Magnesiumacetat und
0,2 g Antimontrioxid

zur Reaktion gebracht und einer Festphasennachkondensation (220 °C/16 Stunden) unterworfen.

Beispiel 3

Analog Beispiel 1 wurden

190,34 g (1,379 Mol) p-Hydroxybenzoesäure,
114,40 g (0,63 Mol) 3-Chlor-4-hydroxybenzoesäure,
197,90 g (1,192 Mol) Isophthalsäure,
109,49 g (0,994 Mol) Hydrochinon,
 38,38 g (0,192 Mol) 4,4'-Dihydroxydiphenylether,
  1,69 g (0,011 Mol) 3,4-Dihydroxybenzoesäure und
524,3  g (5,134 Mol) Acetanhydrid

in Gegenwart von

0,3 g Zinkacetat und
0,2 g Germaniumdioxid

zur Reaktion gebracht und der Festphasennachkondensation (250 °C/10 Stunden) unterworfen.
Sämtliche erhaltenen Polykondensate waren in den bekannten organischen Lösungsmitteln unlöslich. Sie wurden bei Massetemperaturen von 280 bis 300 °C verspritzt. Die Prüfung der Eigenschaften
ergab folgende Ergebnisse :

| Beispiel | Vicat-T-Temp. (°C) | $a_n/a_k$ (kJ/m²) | Biegefestigkeit (MPa) | Biege-E-Modul (MPa) | Viskosität* $\lfloor Pa.s \rfloor$ |
|----------|---------------------|-------------------|------------------------|----------------------|-------------------------------------|
| 1 | 133 | 52/42 | 232 | 10.260 | 300/320 °C |
| 2 | 130 | 41/33 | 210 | 9.300 | 700/280 °C |
| 3 | 132 | 60/40 | 225 | 10.050 | 600/280 °C |

* Schmelzviskosität bei einer Schergeschwindigkeit von $10^3$ sec$^{-1}$ bei der jeweils angegebenen Temperatur

**Patentansprüche**

1. Thermotrope voll-aromatische Polyester auf Basis von

5

(a) (gegebenenfalls substituierter) p-Hydroxybenzoesäure,
(b) 3-Chlor-4-hydroxybenzoesäure,
(c) Isophthalsäure,
(d) Hydrochinon und
(e) 3,4'- und/oder 4,4'-Dihydroxydiphenyl, 3,4'- und/oder 4,4'-Dihydroxydiphenylether und/oder 3,4'-und/oder 4,4'-Dihydroxydiphenylsulfid,

wobei die Polyester die einkondensierten Reste

(a) in einer Konzentration von 25 bis 65 Mol-%, die einkondensierten Reste
(b) in einer Konzentration von 5 bis 40 Mol-%, die einkondensierten Reste
(c) in einer Konzentration von 30 bis 50 Mol-%, die einkondensierten Reste
(e) in einer Konzentration von 1 bis 10 Mol-%,

jeweils bezogen auf die Summe der einkondensierten Reste (a), (b), und (c), enthalten mit der Maßgabe, daß sich die Summe der Konzentrationen von (a) und (b) auf minimal 50 und maximal 70 Mol-% ergänzen und daß das Molverhältnis der einkondensierten Reste c/(d + e) 0,95 bis 1,05 beträgt.

2. Polyester nach Anspruch 1, dadurch gekennzeichnet, daß die Polyester die einkondensierten Reste

(a) in einer Konzentration von 30 bis 50 Mol-%, die einkondensierten Reste
(b) in einer Konzentration von 10 bis 30 Mol-%, und die einkondensierten Reste
(e) in einer Konzentration von 2 bis 6 Mol-%,

jeweils bezogen auf die Summe der einkondensierten Reste (a), (b) und (c), enthalten.

3. Polyester nach Ansprüchen 1 und 2, dadurch gekennzeichnet, daß die Polyester die einkondensierten Reste

(a) in einer Konzentration von 35 bis 47 Mol-% und die einkondensierten Reste
(b) in einer Konzentration von 15 bis 27 Mol-%,

jeweils bezogen auf die Summe der einkondensierten Reste (a), (b) und (c), enthalten.

4. Verfahren zur Herstellung der Polyester nach Ansprüchen 1-3 durch Umsetzung der reaktionsfähigen Derivate der Komponenten (a) bis (e), die auch in situ hergestellt werden können, gegebenenfalls in Gegenwart von Kettenabbrechern, Verzweigungsmitteln und Katalysatoren, bei Temperaturen von 160 bis 370 °C, gegebenenfalls unter vermindertem Druck.

5. Verwendung der Polyester nach Ansprüchen 1-3 zur Herstellung von Formkörpern, Filamenten, Fasern und Folien.

**Claims**

1. Thermotropic fully aromatic polyesters based on

(a) (optionally substituted) p-hydroxy-benzoic acid,
(b) 3-chloro-4-hydroxy-benzoic acid,
(c) isophthalic acid,
(d) hydroquinone and
(e) 3,4'- and/or 4,4'-dihydroxy-diphenyl, 3,4'- and/or 4,4'-dihydroxy-diphenyl ether and/or 3,4'-and/or 4,4'-dihydroxy-diphenyl sulphide,

the polyesters containing the condensed residues

(a) in a concentration of from 25 to 65 mol-%, the condensed residues
(b) in a concentration of from 5 to 40 mol-%, the condensed residues
(c) in a concentration of from 30 to 50 mol-%, and the condensed residues
(e) in a concentration of from 1 to 10 mol-%,

in each case based on the sum of the condensed residues (a), (b) and (c), with the proviso that the sum of the concentrations of (a) and (b) amounts to a minimum of 50 mol-% and a maximum of 70 mol-% and that the molar ratio of the condensed residues c/(d + e) is from 0.95 to 1.05.

2. Polyesters according to Claim 1, characterised in that the polyesters contain the condensed residues

(a) in a concentration of from 30 to 50 mol-%, the condensed residues
(b) in a concentration of from 10 to 30 mol-%, and the condensed residues
(e) in a concentration of from 2 to 6 mol-%,

based in each case on the sum of the condensed residues (a), (b) and (c).

3. Polyesters according to Claims 1 and 2 characterised in that the polyesters contain the condensed residues

(a) in a concentration of from 35 to 47 mol-% and the condensed residues
(b) in a concentration of from 15 to 27 mol-%,

based in each case on the sum of the condensed residues (a), (b) and (c).

4. Process for the production of the polyesters according to Claims 1-3 by reaction of the reactive derivatives of components (a) to (e), which can also be prepared in situ, optionally in the presence of chain stoppers, branching agents and catalysts, at temperatures of from 160 to 370°, optionally under reduced pressure.

5. Use of the polyesters according to Claims 1-3 for the production of moulded articles, filaments, fibres and foils.


**Revendications**

1. Polyesters thermotropes entièrement aromatiques, à base

(a) d'acide p-hydroxybenzoïque (éventuellement substitué),
(b) d'acide 3-chloro-4-hydroxybenzoïque,
(c) d'acide isophtalique.
(d) d'hydroquinone et
(e) de 3,4'- et/ou de 4,4'-dihydroxydiphényle, d'éther de 3,4'- et/ou de 4,4'-dihydroxydiphényle et/ou de sulfure de 3,4'- et/ou de 4,4'-dihydroxydiphényle,

les polyesters contenant les restes

(a) incorporés par condensation à une concentration de 25 à 65 moles %, les restes
(b) incorporés par condensation à une concentration de 5 à 40 moles %, les restes
(c) incorporés par condensation à une concentration de 30 à 50 moles %, les restes
(e) incorporés par condensation à une concentration de 1 à 10 moles %,

dans chaque cas par rapport à la somme des restes (a), (b) et (c) incorporés par condensation sous réserve que la somme des concentrations de (a) et (b) totalise au minimum 50 et au maximum 70 moles % et que le rapport molaire c/(d + e) des restes incorporés par condensation ait une valeur de 0,95 à 1,05.

2. Polyesters suivant la revendication 1, caractérisés en ce qu'ils contiennent les restes

(a) incorporés par condensation à une concentration de 30 à 50 moles %, les restes
(b) incorporés par condensation à une concentration de 10 à 30 moles % et les restes
(e) incorporés par condensation à une concentration de 2 à 6 moles %,

dans chaque cas par rapport à la somme des restes (a), (b) et (c) incorporés par condensation.

3. Polyesters suivant les revendications 1 et 2, caractérisés en ce qu'ils contiennent les restes

(a) incorporés par condensation à une concentration de 35 à 47 moles % et les restes
(b) incorporés par condensation à une concentration de 15 à 27 moles %,

dans chaque cas par rapport à la somme des restes (a), (b) et (c) incorporés par condensation.

4. Procédé de production des polyesters suivant les revendications 1 à 3 par réaction des dérivés réactifs des composants (a) à (e) qui peuvent également être produits in situ, éventuellement en présence d'agents de terminaison de chaîne, d'agents de ramification et de catalyseurs, à des températures de 160 à 370 °C, éventuellement sous pression réduite.

5. Utilisation de polyesters suivant les revendications 1 à 3 pour la production de pièces moulées, de filaments, de fibres et de feuilles.